# EUROPEAN PATENT APPLICATION

(11) **EP 4 458 482 A1**
(43) Date of publication of application: **06.11.2024**
(21) Application number: 22916874.5
(22) Date of filing: 26.12.2022
(51) Int. Cl.: B21C 37/22, B23K 37/04, F28F 1/14

(54) **AUTOMATIC WELDING MACHINE FOR FORMING LONGITUDINAL RIBS ON TUBES**

(30) Priority: 27.12.2021 RU 2021138968
(71) Applicant: Joint-Stock Company "Mechanical Engineering Plant "Zio-Podolsk", 142103 Moskovskaya obl. (RU); Chastnoe Uchrezhdenie Po Obespecheniyu Nauchnogo Razvitiya Atomnoj Otrasli "Nauka I Innovacii", Moscow, 119017 (RU)
(72) Inventor: LEKSIKOV, Valentin Ivanovich, Podolsk, Moscow region 142115 (RU); MOROZOV, Aleksandr Ivanovich, Podolsk, Moscow region 142108 (RU); TEREHOV, Viktor Michailovich, Podolsk, Moscow region 142114 (RU)
(74) Representative: Osmans, Voldemars
(86) International application number: PCT/RU2022/000389
(87) International publication number: WO 2023/128804

(57) **Abstract**

An automatic welding machine for the manufacture of heat exchangers is used in various branches of power engineering for longitudinally finned pipes, including those of small diameter with closely spaced "narrow" trough-shaped ribs.

The welding machine contains clamping units placed symmetrically around the circumference with pushing pneumatic cylinders, a compression drive and pressing and supplying welding current contact welding rollers, a die positioning the ribs with respect to the pipe and clamping units, with windows for the passage of rollers and a mechanism for positioning the die. The clamping units have a mechanism for adjusting the position of the longitudinal axis of the compression drive of the roller, consisting of a compression drive guide, two regulators, a compression drive housing, a ball joint assembly, an adjusting lock nut, a fixing screw and two bronze crackers, and a mechanism for adjusting the contact welding roller, consisting of a roller, bushings, nuts, cheeks, and threaded elements. The die contains a mechanism for positioning the rear part of the die with respect to the axis of the contact welding roller, containing a body of the die, a die body centralizer, a radial stand, an axial stand, a turnbuckle, a turnbuckle centralizer, a roller, a plate, the number of clamping units corresponds to eight simultaneously welded ribs.

## Description

### TECHNICAL FIELD

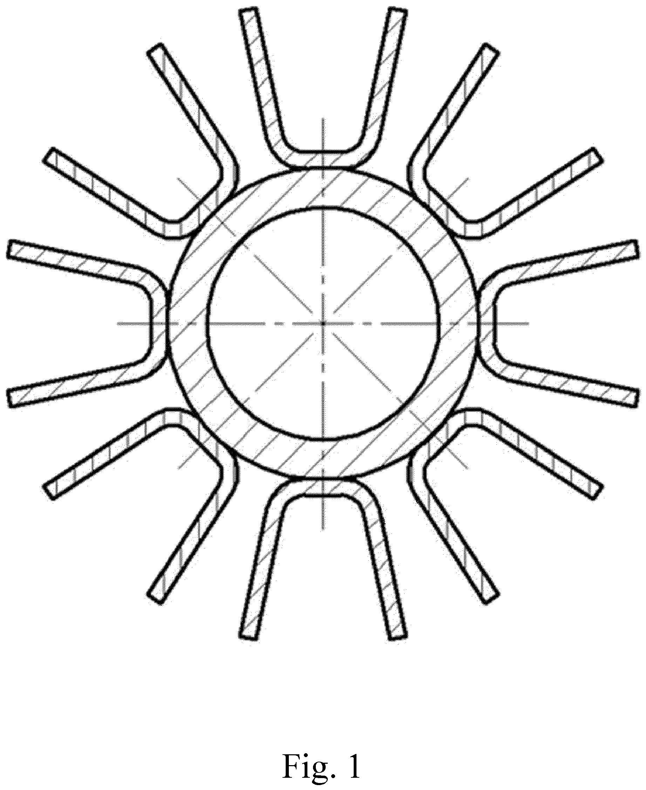

The invention relates to automatic welding machines for the manufacture of heat exchangers and can be used in various branches of power engineering, where longitudinally finned tubes can be used. An automatic welding machine can be used for longitudinal finning of tubes, including those of small diameter with closely spaced "narrow" trough-shaped ribs (Fig. 1). To increase the thermal efficiency of longitudinally finned tubes, it is required to weld as many trough-shaped ribs as possible to its surface, the number of which depends on the width of these ribs, and it, in turn, on the possibility of their high-quality welding by resistance seam-spot welding.

### BACKGOUND ART

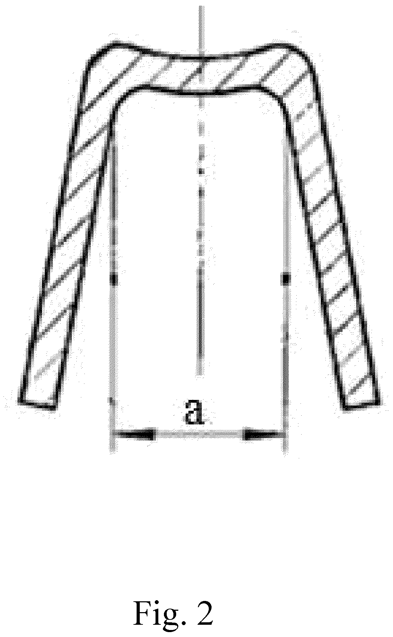

High-performance longitudinally finned tubes currently being designed have "narrow" trough-shaped ribs, in which the width of the fin flange along which welding is performed (Fig. 2, dimension a) is no more than 10% greater than the minimum width of the roller for welding. For high-quality welding of such a rib to the pipe, it is required that there is an exact coincidence of the symmetry axes of the welding roller.

An automatic welding machine is known, in which six welding rollers are located around the circumference, with which, due to the operation of pneumatic cylinders, the trough-shaped profiles of the ribs are pressed (AS USSR No. 454617, V23K 31/08, published on January 30, 1989).

The closest in technical essence and the achieved result is the technical solution implemented in the design of the longitudinal finning machine (OS-1414. Specifications TU10-13-102-83, 1983)

### SUMMARY OF INVENTION

The technical problem of the proposed solution is to improve the quality of the obtained longitudinally finned tubes by improving the accuracy of joining the parts to be welded.

The technical result is to improve the quality of the finned tubes and increase the heat transfer performance.

The problem is solved due to the fact that in an automatic welding machine for longitudinal finning of pipes, containing clamping units placed symmetrically around the circumference with pushing pneumatic cylinders, a compression drive and pressing and supplying welding current contact welding rollers, a die positioning the ribs with respect to the pipe and clamping units, with windows for the passage of rollers and a mechanism for positioning the die, each clamping unit has a mechanism for adjusting the position of the longitudinal axis of the compression drive of the contact welding roller, consisting of a compression drive guide, two eccentric regulators, a compression drive housing, a ball joint assembly, an adjusting lock nut, a fixing screw and two bronze crackers, and a mechanism for adjusting the contact welding roller, consisting of a contact welding roller, a right and left bushing, a right and left nut, a right and left cheek, fixing screws and a bolt, wherein the die contains a mechanism for positioning the rear part of the die with respect to the axis of the contact welding roller, containing a body of the die, a die body centralizer, a radial stand, an axial stand, a turnbuckle, a turnbuckle centralizer, a contact welding roller, a plate, the number of clamping units corresponds to eight simultaneously welded ribs.

This will allow the mechanism to adjust the position of the longitudinal axis of the compression drive of the contact welding roller, for example, during the initial start-up of the machine or repair of the compression drive, as well as to adjust the position of the compression drive guide in relation to the compression drive necessary to compensate for uneven wear of the bronze crackers.

### BRIEF DESCRIPTION OF DRAWINGS

The invention is clarified with drawings.
Fig. 1 shows a finned tube with a diameter of 16 mm with 8 densely spaced "narrow" trough-shaped ribs;
Fig. 2 - "narrow" rib for longitudinal tube finning;
Fig. 3 - contact welding roller for welding eight trough-shaped ribs onto the pipe;
Fig. 4 - mechanism for adjusting the position of the longitudinal axis of the compression drive of the contact welding roller;
Fig. 5 - mechanism for fine adjustment of the position of the guide of the compression drive of the contact welding roller;
Fig. 6- mechanism for adjusting the position of the contact welding roller;
Fig. 7 - mechanism for positioning the rear part of the die with respect to the axis of the contact welding roller;
Fig. 8 - die;
Fig. 9 - the location of the contact welding rollers and liners in the die.

### DESCRIPTION OF EMBODIMENTS

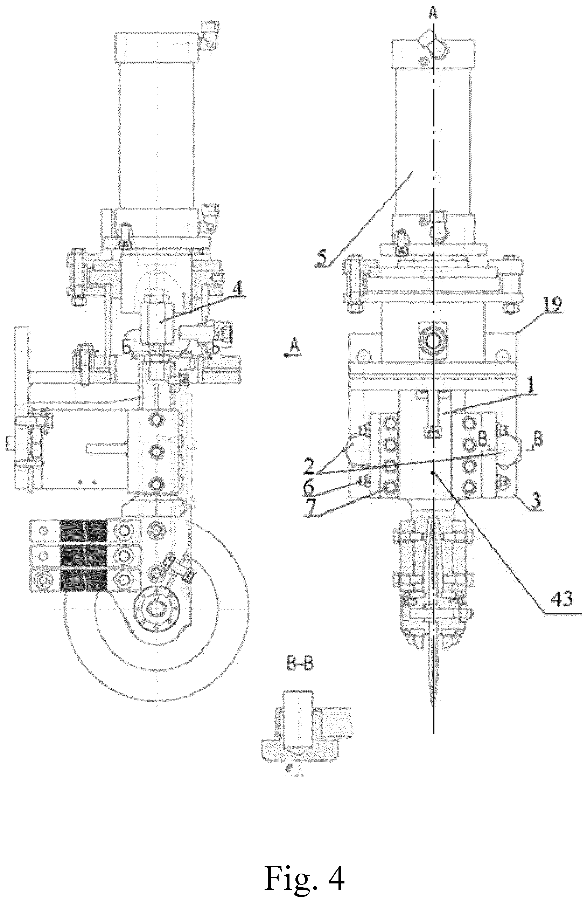

The mechanism for adjusting the position of the longitudinal axis of the compression drive of the contact welding roller (Fig. 4) consists of a compression drive 19, a compression drive guide 1, an eccentric regulator 2, a compression drive housing 3, a ball joint assembly 4, a pneumatic cylinder 5, a fixing screw 6.

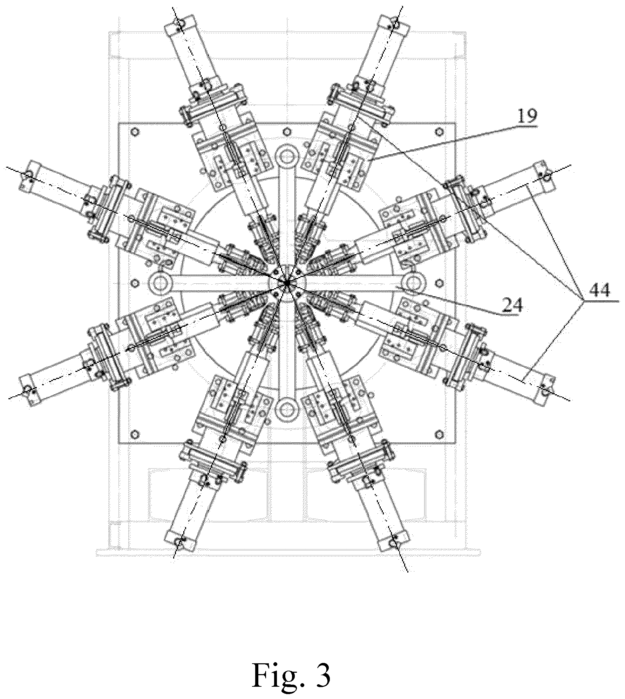

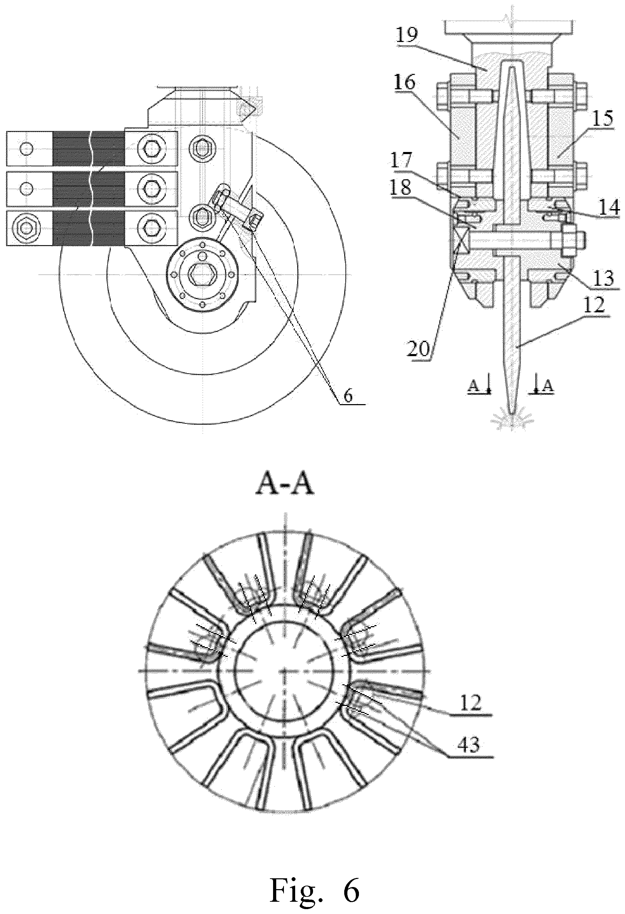

The regulation of the position of the longitudinal axis 43 (Fig. 4, 6) of the contact welding roller compression drive with the corresponding axis of the machine 44 (Fig. 3) is carried out by eccentric regulators 2 (Fig. 4), by turning them within an angle of ±90°. To regulate the compression drive, 4 fixing screws 6 are released, and with the coordinated rotation of the eccentrics, the compression drive is rotated or shifted by the required amount. The amount of angle of rotation or offset is controlled by an appropriate measuring tool. The holes in the places where the drive is attached to the housing 3 are larger than the diameter of the fixing screws 6 by the value of the eccentricity of the eccentric adjusters 2.

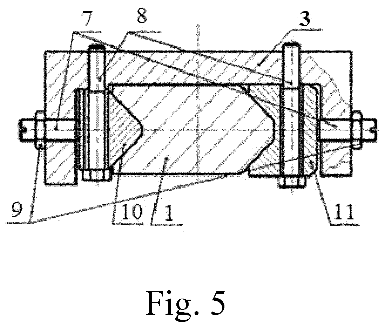

The mechanism for fine adjustment of the position of the compression drive guide of the contact welding roller (Fig. 5) consists of adjusting screws 7, fixing bolts 8, lock nuts 9, left bronze cracker 10, right bronze cracker 11, compression drive guide 1, compression drive housing 3.

Fine adjustment of the position of the compression drive guide 1 (Fig. 5) of the contact welding roller in relation to the compression drive housing 3 to compensate for uneven wear of bronze crackers 10, 11 is carried out as follows: fixing bolts 8 and lock nuts 9 on the adjusting screws 7 are loosened. Fixing bolts 8 are made oval for the possibility of shifting crackers 10 and 11 by adjusting screws 7. Adjusting screws 7 evenly press bronze crackers 10 and 11 to the compression drive guide 1. Uniformity is estimated by the angle of rotation of the slot of the adjusting screw 7. After that, the accuracy of hitting the contact welding roller is checked. into the control die, as well as the smoothness of the compression drive at a pressure of 0.5 atm. To reduce the negative impact on the operation of the compression drive from a possible misalignment of the axes between the pneumatic cylinder 5 (Fig. 4) and the guide of the compression drive 1, a ball-joint assembly 4 is installed. After adjustment and checks, the lock nuts 9 (Fig. 5) are tightened on the adjusting screws 7, and fixing bolts 8 are fixed.

The mechanism for adjusting the position of the contact welding roller (Fig. 6) consists of a contact welding roller 12, a right sleeve 13, a right nut 14, a right cheek 15, a left cheek 16, a left nut 17, a left sleeve 18, compression drive elements 19, mounting screws 6 , central bolt 20. The mechanism for adjusting the position of the contact welding roller works as follows: release the central bolt 20, loosen the screws 6 on the right cheek 15 and the left cheek 16, thereby releasing the right nut 14 and the left nut 17 for adjustment. To shift the contact welding roller 12 to the right, the right nut 14 must be unscrewed to the required amount, and the left 17 must be screwed in until it stops. Due to the threaded connection of the nuts 14 and 17 with the details of the compression drive element 19, the contact welding roller 12, together with the bushings 13 and 18, moves to the required amount. The correct position of the contact welding roller is controlled by the equality of the distances between the welding roller 12 and the rib on the left and right sides. Gauges, feeler gauges or other measuring instruments can be used to estimate distances. After setting the contact welding roller 12 to the required position, it is necessary to tighten the bolt 20 to fix the mutual position of the nuts 14 and 17, and then tighten the cheek clamping screws to ensure a good current supply to the nuts. The nut-sleeve system is a current-transmitting plain bearing.

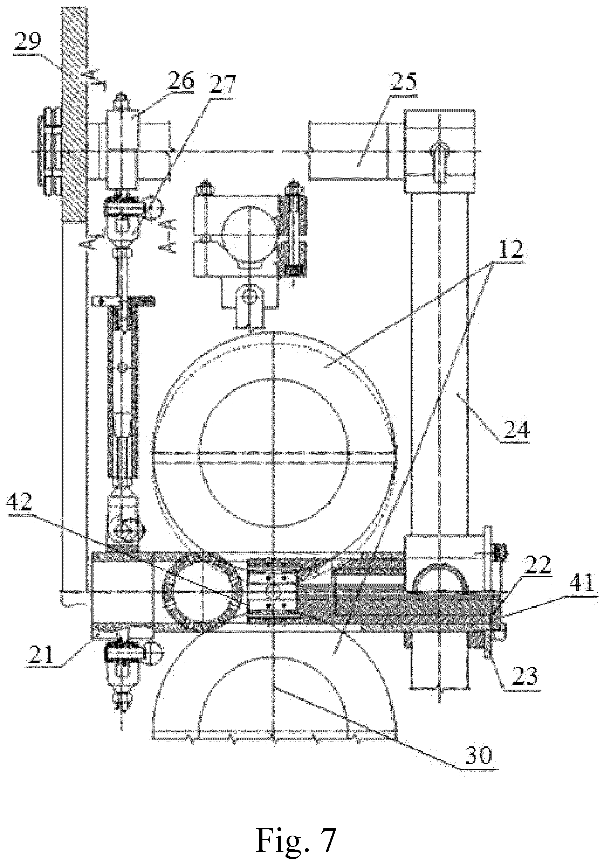

The mechanism for positioning the rear part 42 of the die (Fig. 7) with respect to the axis of the contact welding roller consists of a centralizer 21 of the die body, a die 22, a die body 23, a radial rack 24, an axial rack 25, a turnbuckle centralizer 26, a turnbuckle 27, a contact welding roller 12, plates 29. Due to the dense arrangement of the compression drives 19 (Fig. 3) in relation to each other, the racks 24 of the radial fastening of the die extend far enough beyond the dimensions of the drives. Due to the dense arrangement of the compression drives 19 (Fig. 3) in relation to each other, the racks 24 of the radial fastening of the die extend far enough beyond the dimensions of the drives. This is to ensure proper maintenance of the compression drives. The consequence of such a large size of the structure (Fig. 7), consisting of radial racks 24 and axial racks 25, designed to hold and position the die body 23 with respect to the longitudinal axis of the welded pipe 44, is insufficient rigidity of fixing the rear part 42 of the die. As a result, the rear part 42 of the die, due to the presence of misalignment of the efforts of the compression drives, can be displaced from the axis of the welding roller up to 2 mm, which leads to deflection of the finned tubes, including unacceptable. It is proposed to use a mechanism for positioning the rear part of the die to provide the body with a second support with high rigidity in the area where the displacement of the die body is maximum.

The mechanism works as follows.

The die body 23 fits tightly with its rear part 42 into the centralizer of the die body 21, which is connected by means of turnbuckles 27, turnbuckle centralizers 26, an axial stand 25 of the attachment to the body with a plate 29, and a radial stand 24 of the attachment to the body with a plate 29 and a front part 41 of the die body 23. During commissioning, the position of the rear part 42 of the die body is adjusted by tensioning (twisting) turnbuckles 27. The allowable displacement between the longitudinal axis of the rear part 42 of the die body and the front part 41 of the die body should not exceed 0.5 mm. All four turnbuckles 27 must be tightened.

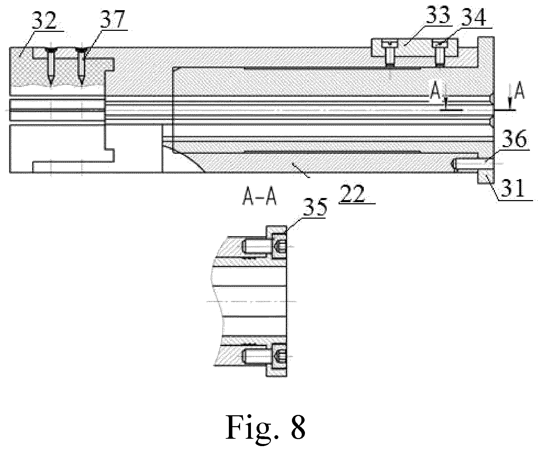

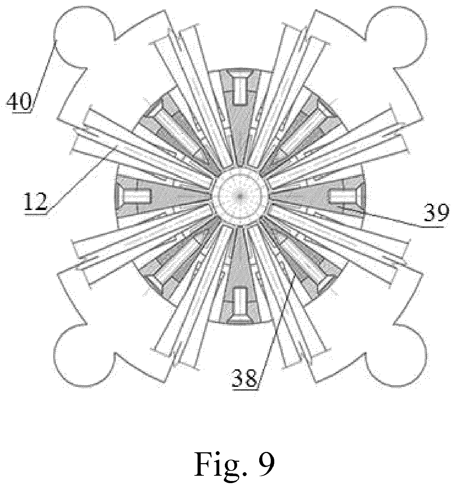

The die 22 (Fig. 8) consists of a die base 32, a replaceable module 23, inserts 38, 39, a key 33, a screw for fastening the key 34, a screw for fastening a replaceable die module 35, a pin 36, a screw or a screw for fastening the insert 37. The base of the die body - reusable, made of austenitic steel. The replaceable module is made of wear-resistant steel type 40X hardened to 38-42 HRC. Liners 38 (Fig. 9), four pieces, are made of insulating material, and four other liners 39 are made of metal with antifriction properties. Insulating inserts 38 are located between the ribs included in one welding circuit (these ribs are welded by a contact welding roller 12 from one welding transformer 40). The insulating insert 38 has a short resource and, because of this, the ribs are not very well positioned on the pipe, but they exclude shunting along the chain "welding roller-rib-liner-rib-welding roller" in the circuit, thereby preventing the appearance of defects such as "burnt" on the walls of the ribs. Metal inserts 39 have a long service life and position the ribs well on the pipe. When combined in the proposed sequence of metal liners 39 and insulating 38, the service life of the latter increases up to 5 times, the labor intensity of line maintenance decreases, and the quality of finned tubes increases.

The automatic welding machine is prepared for operation and operates as follows:
Before putting the machine into production, as well as once a month, the alignment of the contact welding roller compression drives is adjusted by adjusting their position by the mechanism for adjusting the position of the longitudinal axis of the contact welding roller compression drive. When the machine is put into production, as well as at intervals, for example, 1-2 times a year, the positioning mechanism adjusts the alignment of the rear part of the die with respect to the axis of the contact welding roller. Before starting welding, each shift, it is necessary to adjust the position of the contact welding rollers relative to the ribs so that the mismatch of their symmetry axes does not exceed 0.2 mm. The pipe and eight trough-shaped ribs are simultaneously fed by a pulling trolley into the welding zone under the contact welding rollers. In the welding zone, the trough-shaped ribs are pressed against the pipe with a controlled force by contact welding rollers, and the welding current is supplied to them by means of the rollers according to a given cyclogram. The trolley, which is part of the automatic welding machine, ensures uniform movement of the pipe and welded ribs with adjustable welding speed.

The automatic welding machine for longitudinal finning of tubes makes it possible to obtain high-quality longitudinally finned tubes and, due to the eight-rib design, allows to increase the heat transfer characteristics of heat exchange equipment.

## Claims

1. An automatic welding machine for longitudinal finning of pipes, containing clamping units placed symmetrically around the circumference with pushing pneumatic cylinders, a compression drive and pressing and supplying welding current contact welding rollers, a die positioning the ribs with respect to the pipe and clamping units, with windows for the passage of rollers and a mechanism for positioning the die, **characterized in that** each clamping unit has a mechanism for adjusting the position of the longitudinal axis of the compression drive of the contact welding roller, consisting of a compression drive guide, two eccentric regulators, a compression drive housing, a ball joint assembly, an adjusting lock nut, a fixing screw and two bronze crackers, and a mechanism for regulating the contact welding roller, consisting of a contact welding roller, a right and left bushing, a right and left nut, a right and left cheek, fixing screws and a bolt, wherein the die contains a mechanism for positioning the rear part of the die with respect to the axis of the contact welding roller, containing a body of the die, a die body centralizer, a radial stand, an axial stand, a turnbuckle, a turnbuckle centralizer, a contact welding roller, a plate.

2. The automatic welding machine according to claim 1, **characterized in that** it contains the number of clamping units corresponding to eight simultaneously welded ribs.
